Europäisches Patentamt

European Patent Office

Office européen des brevets

(19)

(11) Numéro de publication: **0 215 705
B1**

(12)    FASCICULE DE BREVET EUROPEEN

(45) Date de publication du fascicule du brevet: **27.06.90**

(21) Numéro de dépôt: **86401920.3**

(22) Date de dépôt: **02.09.86**

(51) Int. Cl.⁵: **F 16 H 47/04, F 16 H 39/24**

(54) **Dispositif hydromécanique de transmission de couple.**

(30) Priorité: **02.09.85 FR 8513005**

(43) Date de publication de la demande:
**25.03.87 Bulletin 87/13**

(45) Mention de la délivrance du brevet:
**27.06.90 Bulletin 90/26**

(84) Etats contractants désignés:
**AT BE CH DE GB IT LI LU NL SE**

(56) Documents cités:
**EP-A-0 028 197
EP-A-0 053 544
FR-A- 915 271
FR-A-1 231 667
FR-A-1 239 820
US-A-3 766 804
US-A-4 109 466**

(73) Titulaire: **COMPAGNIE DE CONSTRUCTION
MECANIQUE SULZER
28-30 Boulevard Roger Salengro
F-78202 Mantes la Jolie (FR)**

(72) Inventeur: **Leroy, Daniel
8 Rue des Fontaines Agnès
F-78250 Limay (FR)**
Inventeur: **Boellman, Jean-François
171, Chaussée Jules César
F-95250 Beauchamp (FR)**

(74) Mandataire: **Rinuy, Santarelli
14, avenue de la Grande Armée
F-75017 Paris (FR)**

Courier Press, Leamington Spa, England.

## Description

La présente invention concerne un dispositif hydromécanique de transmission de puissance adapté à entraîner un arbre mené à partir d'un arbre menant à une vitesse de rotation quelconque choisie égale, inférieure ou supérieure à celle de l'arbre menant. On peut alors parler de variateur hydromécanique de vitesse.

On connaît déjà des convertisseurs de couple adaptés à amener un arbre mené à la vitesse d'un arbre menant à partir par exemple d'une vitesse nulle (fonction de montée en vitesse), à l'aide d'aubes de turbines solidaires pour partie de chacun des deux arbres baignant dans un fluide de transmission. Le rendement d'un tel dispositif de transmission hydraulique est très faible en raison des pertes liées aux frottements ainsi qu'à la viscosité du fluide de transmission utilisé. C'est pourquoi, après synchronisation des deux arbres, on attelle mécaniquement ces derniers en rotation, sans plus faire intervenir la transmission hydraulique: cela nécesite une commande spécifique.

Outre leurs faibles rendements, les dispositifs hydrauliques de transmission de couple, actuellement connus, se révèlent peu adaptables dans leurs applications, ne permettant guère en pratique que l'amenée d'un arbre mené à la vitesse de l'arbre menant.

L'invention a pour objet de pallier ces inconvénients en proposant un dispositif hydraulique à haut rendement.

L'invention a également pour objet un dispositif de transmission de couple adapté à entraîner un arbre mené dans une large gamme de vitesses encadrant les vitesses possibles pour l'arbre menant d'où une grande souplesse d'utilisation même pour des vitesses d'arbre mené variant peu.

L'invention propose ainsi un dispositif hydromécanique de transmission de couple caractérisé en ce qu'il comporte trois corps rotatifs coaxiaux, respectivement appelés corps menant, corps intermédiaire et corps mené et un système de corrélation de vitesse adapté à maintenir les vitesses relatives du corps menant et du corps mené par rapport au corps intermédiaire dans un rapport prédéterminé, ces corps menant et mené étant adaptés à être fixés à des arbres coaxiaux à atteler, en rotation, ce corps intermédiaire comportant un circuit hydraulique, le corps menant et ce corps intermédiaire comportant des premiers organes complémentaires d'une première unité pompe/moteur adaptée à provoquer le déplacement d'un fluide dans ce circuit hydraulique variant en fonction de la vitesse relative de rotation entre le corps menant et le corps intermédiaire, tandis que le corps mené et le corps intermédiaire comportent des seconds organes complémentaires d'une seconde unité pompe/moteur adaptée à provoquer le déplacement dudit fluide dans ce circuit hydraulique variant en fonction de la vitesse relative de rotation outre le corps mené (3) et le corps intermédiaire (2), l'une des unités pompes/moteurs ayant une cylindrée variable et un système de commande étant prévu pour contrôler ou provoquer la variation de cette cylindrée.

Un tel dispositif comporte donc un corps tournant intermédiaire, non lié directément ni à l'arbre mené, ni à l'arbre menant, qui est le siège d'un écoulement de fluide dont le débit dépend à la fois des vitesses relatives des corps central et externe par rapport à lui, lesquelles sont par ailleurs maintenues dans un rapport constant, et du rapport instantané des cylindrées des pompes que ces corps central et externe définissent chacun avec le corps intermédiaire. Ce dispositif combine à chaque instant des transmissions de couple de type hydraulique et mécanique, dans des proportions qui varient en fonction desdites vitesses relatives. Son rendement est élevé puisque par exemple, lorsque les arbres menant et mené sont synchronisme, il n'y a plus d'écoulement hydraulique ni frottement visqueux. Ce dispositif est par ailleurs d'une grande souplesse puisque, selon le rapport choisi pour les cylindrées des pompes, qui peut être inférieur, égal ou supérieur au rapport des vitesses relatives, on peut faire varier la vitesse de l'arbre mené de part et d'autre de celle de l'arbre menant.

On connaissait déjà des dispositifs de transmission hydraulique à rapport variable, d'après les documents FR—A—1.231.667 et FR—A—915.271, à au moins quatre corps en mouvement relatif; l'invention s'en distingue par le nombre de corps (il en suffit de trois), le rôle de ceux-ci et leur mode d'attelage les uns aux autres.

Selon une disposition préférée de l'invention le système de corrélation entre les vitesses relatives des corps mené et menant par rapport au corps intermédiaire est un train épicycloïdal plan, de préférence de type II ce qui permet des rapports très différents de 1.

On trouvera des rappels sur les quatre types de trains épicycloïdaux plans simples dans le "traité théorique et pratique des engrenages" par Mr. G. Henriot-Tome 1 pp 505—532-4è Edition Dunod—Paris—1968.

Selon une autre disposition préférée de l'invention, chaque unité pompe/moteur comporte des palettes coulissant, de préférence axialement, dans des logements de l'un des corps contre une paroi continue de l'autre corps présentant des fluctuations périodiques définissant des évidements. Ces parois continues sont de préférence ménagées pour chaque unité pompe/moteur sur le corps intermédiaire tandis que les palettes associées sont logées dans les corps mené et menant.

L'unite pompe/moteur à cylindrée variable est de préférence du type décrit dans le brevet français No. 80.25332 du 28 Novembre 1980, publié sous le numéro FR—2.495.231 tandis que l'unité pompe/moteur à cylindrée fixe est avantageusement du type décrit dans le certificat d'addition No. 80.01502 déposé le 24 Janvier 1980, publié sous le numéro FR—2.474.606 et rattaché au brevet français No. 79.26873. Les deux unités pompe/moteur peuvent bien sûr être toutes les deux à cylindrée variable de manière à augmenter la plage admissible pour le rapport de leurs cylindrées.

Le système de pilotage de la cylindrée de la (ou des) pompe(s) à cylindrée variable est de préférence un circuit hydraulique annexe indépendant du circuit hydraulique principal dans lequel circule le fluide de transmission. Il peut toutefois aussi être un circuit greffé sur le circuit hydraulique principal.

Les objets, caractéristiques et avantages de l'invention ressortent de la description qui suit, donnée à titre d'exemple non limitatif, en regard des dessins annexés sur lesquels:

—la figure 1 est une vue schématique en coupe axiale d'un dispositif hydromecanique de transmission selon l'invention;

—la figure 2 en est une vue transversale en coupe selon la ligne II—II de la figure 1 montrant le système de corrélation de vitesse;

—la figure 3 en est une vue partielle de détail en perspective montrant une surface continue de fond contre laquelle s'appuient des palettes de la pompe primaire;

—la figure 4 est une vue analogue montrant une surface continue composite de fond contre laquelle s'appuient des palettes de la pompe secondaire;

—la figure 5 est un schéma du circuit hydraulique du dispositif de la figure 1;

—la figure 6 est une vue schématique transversale sur laquelle apparaissent à la fois, en traits mixtes, les éléments du système de corrélation de vitesse et, en traits pleins, des portions de pompes primaire et secondaire reliées par un tronçon de circuit hydraulique, les palettes étant, pour des raisons de clarté et de simplification, représentées comme si elles coulissaient radialement;

—la figure 7 est un diagramme de corrélation entre les vitesses absolues de rotation des trois corps rotatifs concentriques du dispositif de la figure 1; et

—la figure 8 est un diagramme représentant les corrélations entre les couples et les puissances transmises en fonction des vitesses relatives entre les corps central et externe.

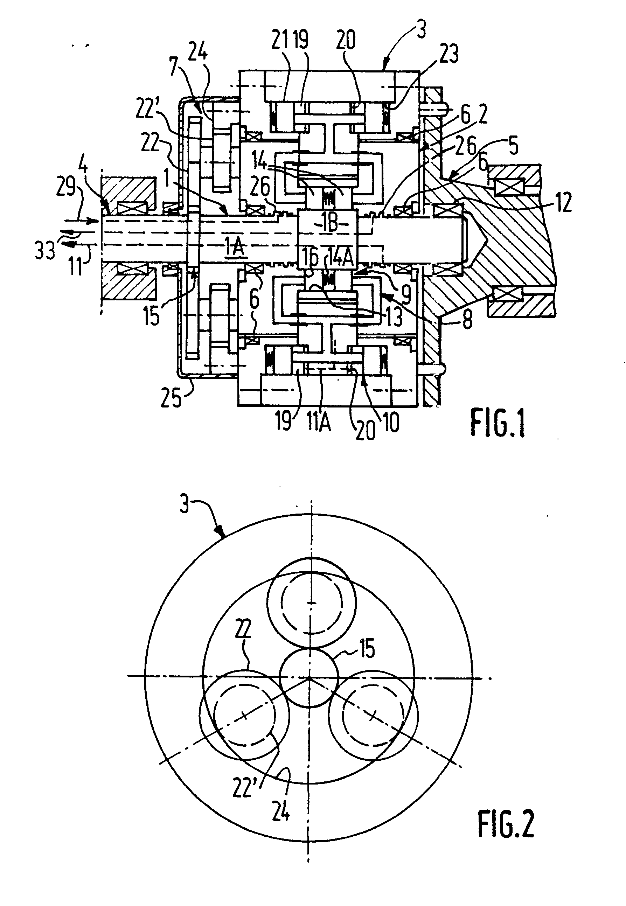

Tel que schématisé aux figures 1 et 2, un dispositif hydromécanique de transmission de couple selon l'invention, qui peut également être désigné par variateur hydrostatique comporte un groupe de trois corps rotatifs concentriques 1, 2 et 3 dont l'un 1, central, est adapté à être assujetti à un premier arbre 4, ici un arbre menant, dont un second 3, externe, est adapté à être assujetti à un second arbre 5, ici un arbre mené, et dont le troisième 2, intermédiaire, est interposé radialement entre les deux autres à la faveur de paliers annulaires 6. A ces corps sont fixés des éléments constitutifs d'un système de corrélation de vitesse 7 adapté à maintenir les vitesses relatives $\omega_3$ et $\omega_1$ des corps 3 et 1 par rapport au corps intermédiaire 2 dans un rapport constant K positif défini, en reprenant au signe près la formule de Willis, par:

$$K = \frac{\omega_3 - \omega_2}{\omega_2 - \omega_1}$$

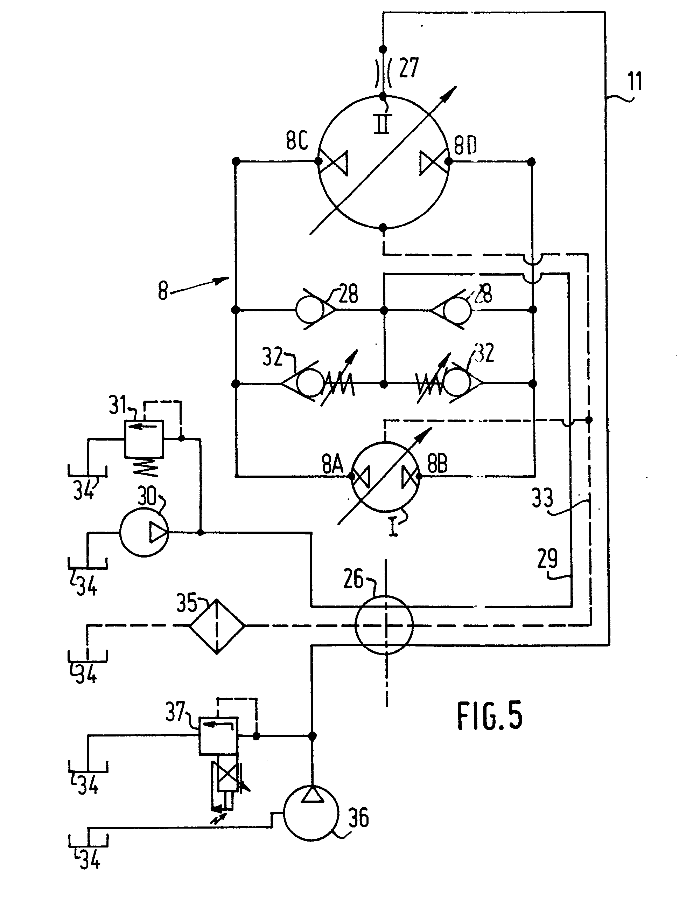

Dans le corps intermédiaire 2 est ménagé un circuit hydraulique 8 dans lequel un écoulement de fluide peut être provoqué par une pompe primaire 9, définie conjointement par de premiers organes complémentaires de pompe portés par les corps 1 et 2, et par une pompe secondaire 10, définie conjointement par de seconds organes complémentaires de pompe portés par les corps 2 et 3, l'une au moins de ces pompes, ici la pompe secondaire 10, ayant une cylindrée variable adaptée à être contrôlée par un système de commande ou de pilotage 11, ici hydraulique, uniquement représenté à la figure 5 pour des raisons de clarté des dessins.

La pompe secondaire est adaptée à pouvoir prendre une cylindrée de référence $C°_{II}$ pour laquelle le rapport des cylindrées $C_I$ et $C_{II}$ des pompes primaire et secondaire est dans un rapport k égal à K.

$$k = \frac{C_I}{C°_{II}} = K$$

Le corps central 1 comporte un arbre central 1A adapté à être assujetti à l'arbre 4 et qui est centré dans l'arbre 5 par un palier 12. Cet arbre central est solidaire, sensiblement en son milieu, d'un bloc cylindrique 1B dans lequel sont ménagés des logements 13 pour des paires de palettes 14, axialement coulissantes appelées palettes de pompe primaire. Entre les palettes d'une même paire, sont disposés des ressorts d'écartement 14A. Sur cet arbre central 1A est en outre fixé un pignon 15.

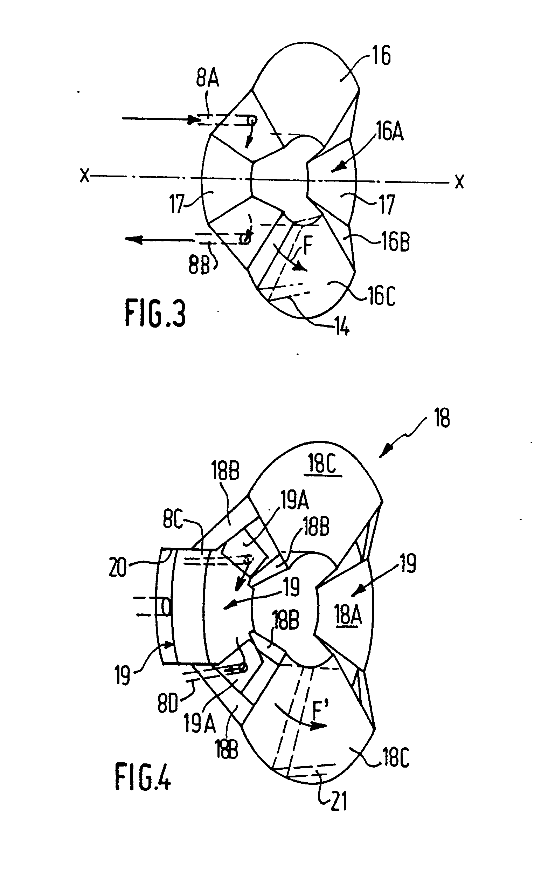

Le corps intermédiaire comporte, axialement de part et d'autre des palettes de pompe primaire 14, des parois continues 16 globalement transversales appelées parois de pompe primaire, dont la géométrie apparaît à la figure 3. Une telle paroi de fond présente des fluctuations cycliques avec des évidements 17, ici au nombre de deux, angulairement répartis de façon régulière, limités par des fonds rectilignes 16A et des zones ou rampes inclinées 16B de transition avec des portions intermédiaires rectilignes 16C. Dans chaque évidement, plus précisément dans leurs rampes inclinées 16B, débouchent deux canaux 8A et 8B faisant partie du circuit hydraulique 8. Les palettes 14, lors d'une rotation relative entre les corps 1 et 2, glissent par leur tranche sur une telle paroi de fond. Un glissement des palettes dans le sens de la flèche F provoque en principe une aspiration de fluide par le canal 8A et un refoulement par le canal 8B.

La pompe primaire 9 est donc avantageusement du type préconisé par le brevet FR—2.474.606 précité Les évidements des parois continues de fond 16 sont de préférence en nombres égaux et disposés axialement au droit les uns des autres.

Le corps intermédiaire 2 présente en outre dans sa portion radialement externe, une portion annulaire 2B délimitée axialement par deux parois globalement transversales 18 appelées parois de pompe secondaire, et dont la géométrie apparaît à la figure 4. De même que pour les parois 16, ces parois 18 présentent des fluctuations cycliques avec des évidements 19, ici au nombre de deux, angulairement répartis de façon régulière, limités par des fonds rectilignes 18A et des zones ou rampes inclinées 18B, ici dédoublées, de transition avec des portions intermédiaires rectilignes 18C. Les fonds 18A sont toutefois ménagés sur des pièces 19 mobiles axialement dans des logements 20 de la portion annulaire 2B. Ces pièces 19, avantageusement solidaires l'une de l'autre en formant une couronne annulaire, comportent, circonférentiellement de part et d'autre des fonds 18A, des oreilles 19A qui en facilitent le guidage dans les logements 20. Ces oreilles 19A sont engagées entre des rampes 18B disposées radialement à l'intérieur et à l'extérieur, en étant moins inclinées que ces dernières par rapport à l'axe global de rotation X—X; ces oreilles et ces rampes assurent une transition continue, quoique composite, entre les portions 18A et 18C pour l'appui de palettes 21.

Comme pour les parois de fond 16, circonférentiellement de part et d'autre du fond 18A de chaque évidement débouchent, ici au travers des oreilles 19A, des canaux 8C et 8D faisant partie du circuit hydraulique 8. Lors d'un glissement de palettes 21 sur une paroi de fond 18 selon la flèche F' de la figure 4, du fluide est aspiré par le canal 8C tandis que du fluide est refoulé par le canal 8D.

Dans l'exemple considéré un canal 11A d'amenée de fluide de pilotage, faisant partie du système hydraulique de pilotage 11, débouche dans chaque logement 20 sous la pièce 19 associée.

Selon une disposition préférée de l'invention les deux parois 18 de pompe secondaire que comporte le dispositif de la figure 1 ont le même nombre d'évidements, lesquels sont axialement au droit les uns des autres. En outre, de façon avantageuse, la valeur maximale du volume des évidements de l'une des parois composites de fond est égale à la valeur minimale du volume des évidements de l'autre des parois, cette valeur commune correspondant à la cylindrée de référence $C°_{II}$ précitée.

Le corps intermédiaire 2 porte, sur son flanc gauche à la figure 1, des axes libres en rotation sur chacun desquels sont montés deux pignons 22 et 22' dont les premiers engrènent avec le pignon 15 du corps 1.

Le corps externe 3 entoure la portion annulaire 2B du corps intermédiaire et présente, axialement en regard des parois de fond 18, des logements 23 dans lesquels coulissent axialement les palettes 21 précitées, appelées palettes de pompe secondaire.

La pompe secondaire à cylindrée variable est donc avantageusement du type décrit dans le brevet 2.495.231 déjà cité, avec un pilotage hydraulique.

Le corps externe comporte, sur son flanc gauche à la figure 1, une couronne 24 à denture interne, avec laquelle engrènent les pignons 22'.

Cette denture 24, les pignons 22 et 22', et le pignon 15 définissent un train épicycloïdal, plus précisément du second type, adapté à constituer le système de corrélation de vitesse 7 précité. Ce train épicycloïdal est protégé par un carter 25.

Il est précisé que dans l'une et l'autre pompe 9 ou 10, les palettes 14 ou 21 sont en saillie axialement vis-à-vis d'une paroi plane transversale qui est voisine des portions intermédiaires rectilignes des parois de fond associées.

Le circuit hydraulique de la figure 5 se compose d'une première portion située à l'intérieur du corps intermédiaire 2 et d'une seconde partie disposée à l'extérieur du dispositif de la figure 1, ces deux parties étant reliées par des joints tournants 26 interposés entre le corps intermédiaire 2 et l'arbre 1A du corps 1.

A l'intérieur du dispositif se trouvent les pompes primaire I est secondaire II à débit variable reliées par le circuit hydraulique 8. A la pompe secondaire arrive également la ligne de pilotage 11 à travers un limiteur 27 de débit de pilotage.

Dans ce circuit hydraulique 8 débouche, au travers de clapets anti-retour de gavage 28, une ligne de gavage 29 en provenance d'une pompe de gavage 30 au travers d'un limiteur de pression de gavage 31. Des clapets 32 de sécurité haute pression sont en outre prévus pour permettre, en cas de besoin une limitation de la haute pression dans le circuit 8.

Du fluide est par ailleurs refoulé des pompes I et II par la ligne de retour 33 (en pointillés) vers le réservoir 34 par un filtre 35.

La ligne de pilotage 11 est alimentée à partir du réservoir 34 par une pompe 36 à laquelle est associé en parallèle un limiteur 37 à tarage ajustable adapté à faire varier la pression de pilotage et adapté à absorber le débit de cette pompe modulé par l'écoulement dans cette ligne 11. Par action sur le tarage de ce limiteur de pression 37, on commande la pression appliquée derrière les fonds mobiles 19. Selon le sens de la différence entre cette pression et la haute pression dans la circuit 8, laquelle est imposée par les clapets 32, et il y a réduction ou augmentation de cylindrée.

En variante non représentée la pompe 36 est supprimée tandis que la ligne 11 est connectée au circuit principal 8.

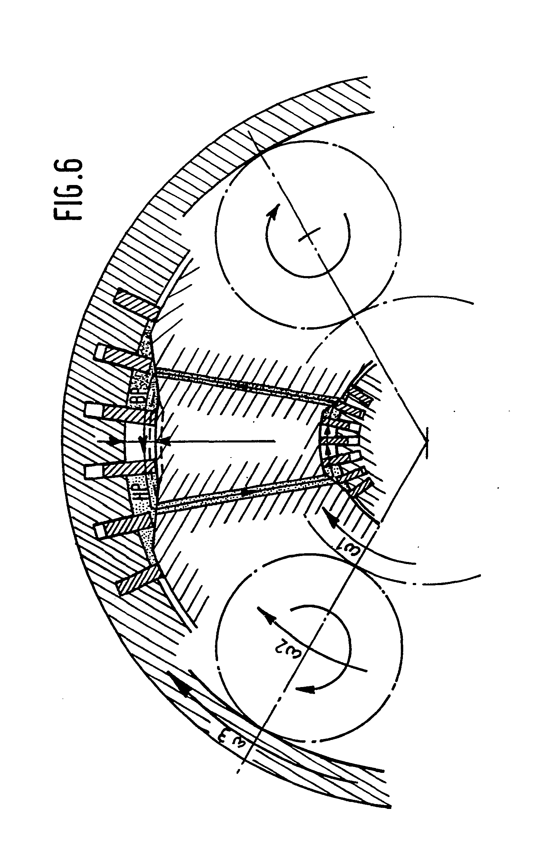

Le fonctionnement du dispositif de la figure 1 peut se décrire à l'aide de la figure 6 où, pour des raisons de simplicité, on n'a représenté qu'un seul évidement pour chacune des pompes, les palettes étant représentées ici comme pouvant coulisser radialement. Ce n'est donc qu'une coupe fictive du dispositif de la figure 1. La cylindrée variable de la pompe secondaire est matérialisée par des lignes pointillées qui n'ont bien sûr pas de signification structurelle.

Lorsque l'arbre d'entrée 4 est entraîné à une vitesse constante $\omega_1$ (de 500 à 300 tr/mn par exemple) et que la cylindrée de la pompe secondaire est à sa valeur de référence, on vérifie qu'il y a simplement circulation du fluide entre les pompes I et II sans transmission de couple. En effet le débit de la pompe primaire vaut:

$$C_I (\omega_1 - \omega_2)$$

tandis que le débit de la pompe secondaire vaut:

$$C^\circ_{II} (\omega_2 - \omega_3)$$

Compte tenu de la définition de $C^\circ_{II}$, de k et de K, ces débits sont égaux.

Pour cette valeur de cylindrée la vitesse de l'arbre menant est sans effet sur celle de l'arbre mené. Si cette dernière est nulle elle reste nulle.

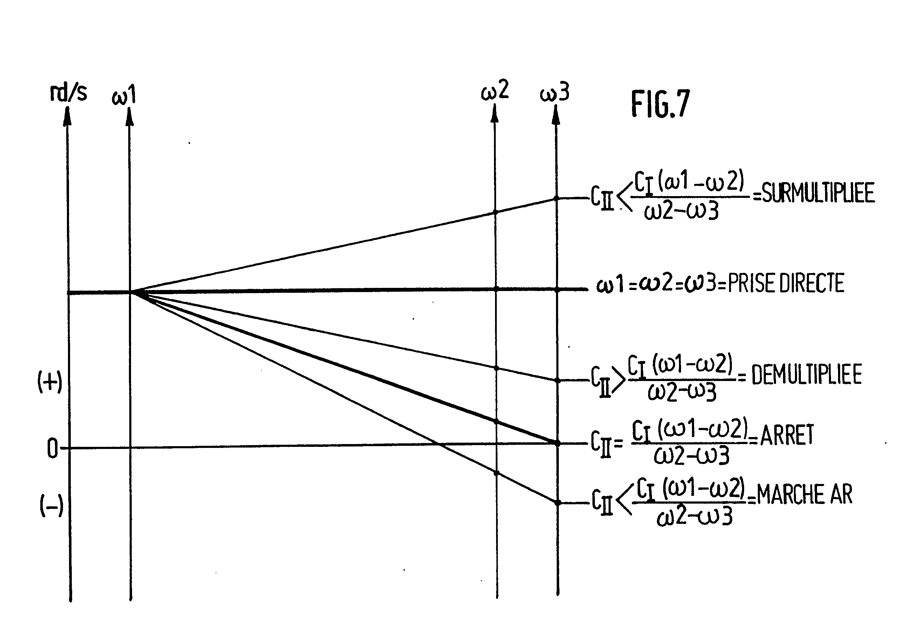

Si par action sur la pression dans la ligne de pilotage on augmente la cylindrée de la pompe secondaire, cette dernière refoule plus de fluide que ne peut en débiter la pompe primaire (voir le sens des flèches à la figure 6). Il en résulte un pression élevée dans le conduit gauche de la figure 6 et, par réaction sur les palettes de la pompe secondaire, un couple d'entraînement sur le corps externe 3 dans le sens des aiguilles d'une montre. La vitesse $\omega_3$ de ce dernier tend donc à se rapprocher de celle $\omega_1$ du corps 1. On voit sur le diagramme de la figure 7 que, pour $\omega_1$ constant, une augmentation de $\omega_3$ entraîne une augmentation de $\omega_2$ du fait du train épicycloïdal. Ce phénomène se réitère jusqu'à un régime de synchronisme.

Le régime de synchronisme est stable car si, sous l'effet d'une augmentation parasite du coupe résistant appliqué à l'arbre 5, sa vitesse décroit momentanément, elle revient spontanément au synchronisme. Si par contre la vitesse de l'arbre 5 augmente brusquement, et devient donc supérieure à celle du corps intermédiaire, l'écoulement de fluide change de sens; comme la cylindrée de la pompe secondaire est toujours supérieure à sa valeur de référence il en découle, par symétrie avec ce qui précède, qu'une pression elevée apparaît dans le canal droit de la figure 6 d'où par réaction sur les palettes 21 un couple de ralentissement.

Il est par contre possible de dépasser le régime de synchronisme si, dès que $\omega_3$ devient supérieur à $\omega_1$, on abaisse, par action sur le circuit de pilotage, la cylindrée de la pompe secondaire au dessous de sa valeur de référence: les phénomènes précités s'inversent et $\omega_3$ tend à s'écarter de $\omega_1$ en augmentant. De même, si $\omega_3$ est inférieur à $\omega_1$, $\omega_3$ tend à se rapprocher de 0 et à devenir négatif permettant ainsi un régime de "marche arrière".

On peut stabiliser $\omega_3$ à une valeur quelconque différente de $\omega_1$ en commutant périodiquement la pression de pilotage entre deux valeurs amenant respectivement la cylindrée de la pompe secondaire au dessous ou au dessous de sa valeur de référence.

La figure 7 montre les droites de corrélation correspondant aux cinq principaux régimes de transmission de couple, pour une vitesse constante d'entraînement $\omega_1$ (à partir du bas): marche arrière—arrêt—vitesse démultipliée—prise directe—vitesse surmultipliée. Le dispositif selon l'invention permet facilement de passer d'un régime à un autre (démarrage dans un sens quelconque, accélération, décélération...).

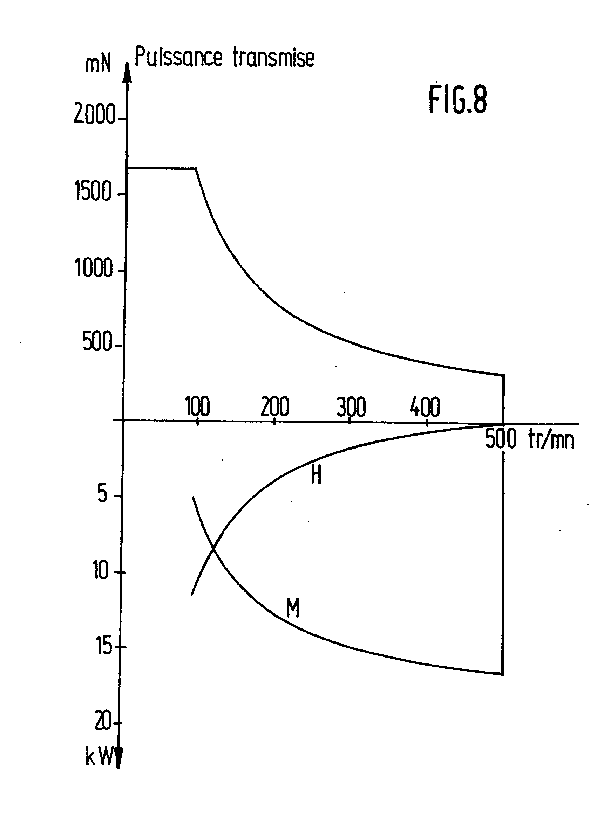

Il ressort de la figure 8 que la puissance transmise (partie haute du diagramme) présente un plateau lorsque la vitesse de l'arbre mené augmente, puis diminue. A la partie basse il apparaît que, pour une puissance transmise supposée constante la contribution de la composante de transmission mécanique augmente (courbe M) tandis que la composante de transmission hydraulique diminue (courbe H) lorsque la vitesse de l'arbre mené se rapproche de celle de l'arbre menant. On passe donc, contrairement aux dispositifs de transmission de l'art antérieur, de façon progressive d'un régime de transmission principalement hydraulique à un régime de transmission principalement mécanique.

On notera par ailleurs qu'au synchronisme, il n'y a plus d'écoulement de fluide dans les pompes primaire et secondaire et le dispositif se comporte comme un semple arbre de transmission: il n'y a pas de pertes ni par frottement visqueux, ni par frottement mécanique (du fait des palettes, dentures, paliers du train épicycloïdale...), ce qui autorise un rendement élevé.

Il va de soit que la description qui précède n'a été proposée qu'à titre d'exemple non limitatif et que de nombreuses variantes peuvent être proposées par l'homme de l'art sans sortir du cadre de l'invention, notamment en ce qui concerne le choix de la pompe à cylindrée variable (au primaire ou au secondaire), la structure particulière des diverses pompes (notamment la pompe à cylindrée fixe, s'il y en a une, peut être à palettes mobiles radialement ou être de tout autre type), le détail des circuits hydrauliques ou encore le type choisi pour le train épicycloïdal (de type I, III ou IV) ou la structure de tout autre système de corrélation de vitesse.

Les rôles des corps central et externe peuvent être intervertis. Plus généralement, un dispositif selon l'invention comporte trois corps coaxiaux, dont la disposition relative est quelconque, mais dont l'un est menant, l'autre est mené et le troisième assure un intermédiaire mécanique entre les deux premiers.

## Revendications

1. Dispositif hydromécanique de transmission de couple, caractérisé en ce qu'il comporte trois corps rotatifs coaxiaux respectivement apellés corps menant (1), corps intermédiaire (2) et corps mené (3) et un système de corrélation de vitesse (7) adapté à maintenir les vitesses relatives du corps menant et du corps mené par rapport au corps intermédiaire dans un rapport prédéterminé, ces corps menant (1) et mené (3) étant adaptés à être fixés à des arbres coaxiaux (4, 5) à atteler en rotation, ce corps intermédiaire (2) comportant un circuit hydraulique (8), le corps menant et ce corps intermédiaire comportant des premiers organes complémentaires d'une première unité pompe/moteur (9) adaptée à provoquer le déplacement d'un fluide dans ce circuit hydraulique variant en fonction de la vitesse relative de rotation entre le corps menant (1) et le corps intermédiaire (2), tandis que le corps mené (3) et le corps intermédiaire (2) comportent des seconds organes complémentaires d'une seconde unité pompe/moteur (10) adaptée à provoquer le déplacement dudit fluide dans ce circuit hydraulique variant en fonction de la vitesse relative de rotation outre le corps mené (3) et le corps intermédiaire (2), l'une des unités pompes/ moteurs ayant une cylindrée variable et un système de commande (11) étant prévu pour contrôler la variation de cette cylindrée.

2. Dispositif selon la revendication 1, caractérisé en ce que le système de corrélation de vitesse (7) est un train épicycloïdal comportant deux planétaires (15, 24) reliés respectivement aux corps menant et mené, et les satellites (22, 22') engrenant avec ces planétaires qui sont liés au corps intermédiaire.

3. Dispositif selon la revendication 2, caractérisé en ce que le train épicycloïdal est du second type, c'est-à-dire comporte une couronne (24) à denture interne solidaire de l'un des corps mené ou menant, un pignon (15) solidaire de l'autre des corps mené ou menant, et une pluralité d'axes montés libres en rotation sur le corps intermédiaire, chacun de ces axes portant deux pignons (22, 22') engrenant respectivement avec la couronne à denture interne et avec le pignon.

4. Dispositif selon l'une quelconque des revendications 1 à 3, caractérisé en ce que les unités pompe/moteur (9, 10) comportent des palettes (14, 21) coulissant axialement contre des parois de fond (16, 18) globalement transversales présentant des évidements (17, 19) régulièrement répartis de façon angulaire.

5. Dispositif selon la revendication 4, caractérisé en ce que, pour l'unité pompe/moteur (10) à cylindrée variable, le fond des évidements est ménagé sur des pièces (19) mobiles axialement sous l'action d'une pression de pilotage.

6. Dispositif selon la revendication 5, caractérisé en ce que les pièces mobiles associées à une paroi de fond sont réunies en une couronne annulaire mobile axialement.

7. Dispositif selon l'une quelconque des revendications 1 à 6, caractérisé en ce que l'unité pompe/moteur (9) définie par le corps menant et le corps intermédiaire a une cylindrée fixe tandis que l'unité pompe/moteur (10) définie par le corps intermédiaire et le corps mené a une cylindrée variable.

8. Dispositif selon l'une quelconque des revendications 1 à 7, caractérisé en ce que le corps menant (1) est disposé radialement à l'intérieur du corps intermédiaire (2) lequel est disposé radialement à l'intérieur du corps mené (3).

**Patentansprüche**

1. Hydromechanischer Drehmomentwandler, dadurch gekennzeichnet, daß er drei koaxiale rotierende Körper, Antriebskörper (1), Zwischenkörper (2) und Abtriebskörper (3) genannt, und ein Geschwindigkeitskorrelationssystem (7) besitzt, das die Relativegeschwindigkeiten des Antriebskörpers und des Abtriebskörpers bezüglich des Zwischenkörpers in einem bestimmten Verhältnis hält, daß der Antriebskörper (1) und der Abtriebskörper (3) so ausgebildet sind, daß sie an bezüglich Drehung zu koppelnden, koaxialen Wellen (4, 5) befestigt werden können, wobei der Zwischenkörper (2) einen Hydraulikkreis (8) besitzt, und der Antriebskörper und der Zwischenkörper erste komplementäre Organe einer ersten Pumpe-Motor-Einheit (9) besitzen, die so ausgebildet ist, daß sie die Bewegung eines Fluides in diesem Hydraulikkreis bewirkt, die sich in Abhängigkeit von der relativen Drehgeschwindigkeit zwischen dem Antriebskörper (1) und dem Zwischenkörper (2) ändert, während der Abtriebskörper (3) und der Zwischenkörper (2) zweite ergänzende Organe einer zweiten Pumpe-Motor-Einheit (10) besitzen, die so ausgebildet ist, daß sie die Bewegung dieses Fluids in diesem Hydraulikkreis bewirkt, die sich in Abhängigkeit von der relativen Drehgeschwindigkeit zwischem dem Abtriebskörper (3) und dem Zwischenkörper (2) ändert, wobei eine der Pumpe-Motor-Einheiten einen veränderlichen Hubraum besitzt und ein Steuersystem (11) zur Steuerung der Änderung dieses Hubraums vorgesehen ist.

2. Vorrichtung nach Anspruch 1, dadurch gekennzeichnet, daß das Geschwindigkeitskorrelationssystem (7) ein Umlaufgetriebe ist, bestehend aus zwei Zentralrädern (15, 24), die mit dem Antriebskörper oder dem Abtriebskörper verbunden sind, und den mit diesen Zentralrädern kämmenden Planetenrädern (22, 22'), die mit dem Zwischenkörper verbunden sind.

3. Vorrichtung nach Anspruch 2, dadurch gekennzeichnet, daß das Umlaufgetriebe vom zweiten Typ ist, d.h. einen Zahnkranz (24) mit Innenverzahnung, der an einem der Antriebsoder Abtriebskörper befestigt ist, ein an dem anderen der Antriebs- oder Abtriebskörper befestigtes Zahnrad (15) und mehrere frei drehbar auf dem Zwischenkörper montierte Achse besitzt, deren jede zwei Zahnräder (22, 22') trägt, die mit dem innenverzahnten Zahnkranz bzw. mit dem Zahnrad kämmen.

4. Vorrichtung nach einem der Ansprüche 1 bis 3, dadurch gekennzeichnet, daß die Pumpe-Motor-Einheiten (9, 10) Paletten (14, 21) besitzen, die axial auf global quer verlaufenden Bodenwänden (16, 18) gleiten, die winkelmäßig regelmäßig verteilte Ausnehmungen (17, 19) aufweisen.

5. Vorrichtung nach Anspruch 4, dadurch gekennzeichnet, daß der Boden der Ausnehmungen bei der Pumpe-Motor-Einheit (10) mit veränderlichem Hubraum auf Teilen (19) ausgebildet ist, die axial unter der Wirkung eines Steuerdrucks beweglich sind.

6. Vorrichtung nach Anspruch 5, dadurch gekennzeichnet, daß die einer Bodenwand zugeordneten beweglichen Teile in einem axial beweglichen ringförmigen Kranz vereinigt sind.

7. Vorrichtung nach einem der Ansprüche 1 bis 6, dadurch gekennzeichnet, daß die durch den Antriebskörper und den Zwischenkörper definierte Pumpe-Motor-Einheit (9) einen feststehenden Hubraum hat, während die durch den Zwischenkörper und den Abtriebskörper definierte Pumpe-Motor-Einheit (10) einen veränderlichen Hubraum hat.

8. Vorrichtung nach einem der Ansprüche 1 bis 7, dadurch gekennzeichnet, daß der Antriebskörper (1) radial im Inneren des Zwischenkörpers (2) angeordnet ist, der radial im Inneren des Abtriebskörpers (3) angeordnet ist.

**Claims**

1. A hydromechanical torque transmission device, characterized in that it comprises three coaxial rotatable bodies termed respectively the driving body (1), the intermediary body (2) and the driven body (3), and a speed correlation system (7) adapted to maintain the relative speeds of rotation of the driving body and the driven body relative to the intermediary body at a pre-determined ratio, these driving (1) and driven (3) bodies being adapted to be fixed to coaxial shafts (4, 5) to couple in rotation this intermediary body (2) comprising a hydraulic circuit (8), and the driving body and the intermediary body comprise first complementary elements of a first pump/motor unit (9) adapted to cause displacement of a fluid in this hydraulic circuit varying as a function of the relative speeds of rotation of the driving body (1) and the intermediary body (2) whereas the driven body (3) and the intermediary body (2) comprise second complementary elements of a second pump/motor unit (10) adapted to cause displacement of the said fluid in this hydraulic circuit varying as a function of the relative speeds of rotation of the driven body (3) and the intermediary body (2), one of the pump/motor units has a variable volumetric capacity cylinder, and a control system (11) is provided to control the variations in volumetric capacity of this cylinder.

2. A device according to Claim 1, characterized in that the speed correlation system (7) is an epicyclic gear comprising two planet wheels (15, 24) connected respectively to the driving and driven bodies, and the satellite wheels (22, 22') which mesh with these planet wheels are fixed to the intermediary body.

3. A device according to Claim 2, characterized in that the epicyclic gear is of the second type, that is to say it comprises a crown (24) with internal teeth fixed to one of the driving or driven bodies, a gearwheel (15) fixed to the other of the driving or driven bodies, and a plurality of shafts mounted to rotate freely on the intermediary body, each of these shafts carrying two gearwheels (22, 22') which mesh respectively with the internally toothed crown and with the gearwheel.

4. A device according to any one of Claims 1 to 3, characterized in that the pump/motor units (9, 10) comprise vanes (14, 21) which slide axially against generally transverse back walls (16, 18) which comprise recesses (17, 19) which are regularly spaced angularly.

5. A device according to Claim 4, characterized in that in the case of the variable volumetric capacity pump/motor unit (10) the back of the recesses is formed on elements (19) which are axially movable unter the force of a control pressure.

6. A device according to Claim 5, characterized in that the movable elements which are associated with a back wall are connected into an axially movable annular crown.

7. A device according to any one of Claims 1 to 6, characterized in that the pump/motor unit (9) defined by the driving body and the intermediary body has a fixed volumetric capacity, whereas the pump/motor unit (10) defined by the intermediary body and the driven body has a variable volumetric capacity.

8. A device according to any one of Claims 1 to 7, characterized in that the driving body (1) is disposed radially inside the intermediary body (2) which is disposed radially inside the driven body (3).

FIG.1

FIG.2

FIG.3

FIG.4

FIG.5

FIG.6

FIG.7

$$C_{II} < \frac{C_I (\omega 1 - \omega 2)}{\omega 2 - \omega 3} = \text{SURMULTIPLIEE}$$

$$\omega 1 = \omega 2 = \omega 3 = \text{PRISE DIRECTE}$$

$$C_{II} > \frac{C_I (\omega 1 - \omega 2)}{\omega 2 - \omega 3} = \text{DEMULTIPLIEE}$$

$$C_{II} = \frac{C_I (\omega 1 - \omega 2)}{\omega 2 - \omega 3} = \text{ARRET}$$

$$C_{II} < \frac{C_I (\omega 1 - \omega 2)}{\omega 2 - \omega 3} = \text{MARCHE AR}$$

EP 0 215 705 B1

FIG.8